# EUROPÄISCHE PATENTSCHRIFT

(11) **EP 2 533 003 B1**
(45) Veröffentlichungstag und Bekanntmachung des Hinweises auf die Patenterteilung: **01.08.2018**
(21) Anmeldenummer: 12004233.8
(22) Anmeldetag: 04.06.2012
(51) Int. Cl.: F41G 7/22, G02B 26/08, G02B 25/04, G02B 27/64, G02B 5/04

(54) **Optische Vorrichtung zum Führen von Strahlung einer Objektszene auf einen Detektor**
Optical device for guiding radiation of an object scene to a detector
Dispositif optique destiné au guidage du rayonnement d'une scène sur un détecteur

(30) Priorität: 11.06.2011 DE 102011104023
(43) Veröffentlichungstag der Anmeldung: 12.12.2012
(73) Patentinhaber: Diehl Defence GmbH & Co. KG, 88662 ÜBERLINGEN (DE)
(72) Erfinder: Eckhardt, Reiner, 88662 Überlingen (DE); Barenz, Joachim, Dr., 88662 Überlingen (DE); Kuppel, Hubert, 78333 Stockach (DE)
(74) Vertreter: Diehl Patentabteilung

(56) Entgegenhaltungen:
- EP-A1- 1 203 978
- WO-A1-2005/114987
- DE-A1- 10 135 222
- DE-C- 3 805 642
- FR-A- 1 201 402
- FR-A1- 2 690 997
- US-A- 5 592 331

## Beschreibung

Die Erfindung betrifft eine optische Vorrichtung zum Führen von Strahlung aus einer Objektszene auf einen Detektor mit einem Ausrichtmittel zum Verschwenken des Gesichtsfelds des Detektors relativ zu einer vorbestimmten Richtung, einer Detektoroptik und einem optischen Gelenk zum Führen des Strahlengangs aus dem verschwenkten Gesichtsfeld in die Detektoroptik.

Lenkflugkörper sind üblicherweise mit einer optischen Zielverfolgungsvorrichtung ausgerüstet, die einen Suchkopf an der vorderen Spitze des Lenkflugkörpers umfasst. Durch die teilweise extrem hohe Fluggeschwindigkeit, für die ein solcher Lenkflugkörper ausgelegt sein muss, stellt die vordere Spitze eine aerodynamisch exponierte Position dar, an die hohe Anforderungen an die Bauform und das Bauvolumen gestellt sind. Diese Vorgaben stehen meist im Widerspruch zu Forderungen aus der Flugkörperlenkung, die zum Beispiel einen großen optischen Schielwinkel verlangen, eine hohe optische Reichweite der Zielerkennung und Zielverfolgung und eine präzise Ausgabe der Zielablage.

Aus der DE 10 2009 029 895 A1 ist ein Suchkopf eines Lenkflugkörpers bekannt, bei dem eine Prismenanordnung ein optisches Gelenk bildet. Bei einem Verschwenken des Gesichtsfelds des Detektors des Suchkopfs wird das vorderste Prisma dieser Anordnung zusammen mit einer Eingangsoptik mit dem Gesichtsfeld mit verschwenkt, wohingegen die nachfolgenden Prismen strukturfest ruhen oder mit einem Rollrahmen mitbewegt werden. Durch den Prismenaufbau ist dieses optische Gelenk jedoch relativ voluminös. Ein ähnlicher Suchkopf ist auch aus der DE 101 35 222 A1 oder der WO 2005/114987 A1 bekannt.

Aus der DE 10 2008 026 990 A1 ist ein optisches Gelenk bekannt, das auf voluminöse Prismen verzichtet und einen Schielwinkel von 90 bis -90 Grad durch Spiegel erreicht. Jedoch ist auch diese Anordnung relativ groß bauend.

Aus der FR 2 690 997 A1 ist ein Zielerfassungssystem bekannt, bei welchem über ein um zwei Achsen drehbares Doppelprisma ein Raum von etwa 2 Sterad abtastbar ist. Dem Doppelprisma ist ein Drehkompensationsprisma nachgeordnet, das im Vergleich zum Doppelprisma mit der halben Geschwindigkeit um seine Längsachse rotiert, um das Zielbild in der Brennebene des Zielerfassungssystems in derselben Richtung zu halten. Auf einem ähnlichen Konzept beruht auch die aus der DE 38 05 642 C1 bekannte Vorrichtung zur Abtastung eines kugelförmigen Raums, bei welcher zwischen den in einer Bildebene eines Objektivs in einer Reihe angeordneter Detektoren und dem Objektiv ein um die optische Achse des Objektivs drehbar gelagertes Wendeprisma und vor dem Objektiv ein um zwei Achsen drehbar gelagertes Doppelprisma vorgesehen ist. Das Doppelprisma dient zur Abtastung des Raumes und das Wendeprisma sorgt bei einer Drehung des Doppelprismas um seine Primärachse durch eine entsprechende Drehung dafür, dass die Detektoren ausgeleuchtet werden.

Die FR 1 201 402 A beschäftigt sich mit einer Einrichtung zur Trajektorie-Korrektur eines Geschosses. Das Geschoss verfügt hierfür über eine Kameraeinrichtung zur Beobachtung eines Ziels. Mittels verstellbarer Spiegel oder eines oder mehrerer Prismen können unterschiedliche Gesichtsfelder erfasst werden.

Aus der EP 1 203 978 A1 ist es bekannt, für eine optische Einrichtung für einen Flugkörper ein sphärisches, afokales Fenster einzusetzen.

Die US 5 592 331 A beschäftigt sich mit einem Adapter für ein optisches Instrument. Dieser in Bezug auf seine optische Achse ausrichtbare Adapter kann mittels eines Faltenbalgs an dem optischen Instrument befestigt werden.

Es ist eine Aufgabe der Erfindung, eine Optik mit einem großen optischen Schielwinkel anzugeben, die besonders kompakt ausführbar ist.

Diese Aufgabe wird durch eine optische Vorrichtung gemäß Patentanspruch 1 gelöst.

Mit einem Umkehrprisma können die optischen Eigenschaften eines Spiegels und eines Prismas miteinander kombiniert werden. Es ermöglicht die optische Weiterleitung eines von vorne eintreffenden Strahls nach hinten, was mit einem einfachen Spiegel nicht möglich wäre, und die Realisierung eines Schielwinkels beziehungsweise einer Gesichtsfeldverschwenkung von ±90 Grad und mehr. Eine serielle Anordnung von mehreren Spiegeln beziehungsweise Prismen ist nicht notwendig, weshalb eine sehr kompakte Bauweise des optischen Gelenks erreicht werden kann.

Die optische Vorrichtung kann Teil einer Kamera zum Abbilden der Objektszene auf den Detektor sein. Insofern kann die optische Vorrichtung ein Schwenkvorsatz für ein Kameraobjektiv sein. Das Gesichtsfeld kann das eingangsbezogene Gesichtsfeld des Detektors sein, also derjenige Sichtbereich, mit dem der Detektor in die Objektszene "sieht", bzw. der auf den Detektor abgebildet wird.

Auch kann die optische Vorrichtung eine aktive Vorrichtung zum Abstrahlen von Strahlung umfassen, die durch das Verschwenken des Gesichtsfelds bzw. des optischen Gelenks an eine bestimmte Position der Objektszene gerichtet wird. Gegebenenfalls kann auf einen Detektor verzichtet werden. Bei Fehlen eines Detektors kann sich das Gesichtsfeld auf das Abstrahlfeld einer Strahlungsquelle beziehen, wobei die Detektoroptik eine Strahlformoptik sein kann. Der Detektor kann somit durch eine Strahlungsquelle ersetzt oder ergänzt werden. Die Strahlungsquelle kann eine Laserquelle sein, sodass die optische Vorrichtung als Laserausrichtvorrichtung dient.

Die optische Vorrichtung weist eine Eingangsoptik auf, die das erste optische Element umfassen kann, auf das aus der Objektszene kommende Strahlung auftrifft. Das Ausrichtmittel kann ein mechanisches Mittel zum Verschwenken eines optischen Bauteils sein, so dass das Gesichtsfeld verschwenkt wird. Entsprechend der Erfindung ist die Eingangsoptik durch das Ausrichtmittel verschwenkbar, sodass diese auf ein Objekt der Objektszene gerichtet werden kann. Die Verschwenkung kann - ganz allgemein - relativ zum Detektor oder - noch allgemeiner - relativ zu einem ortsfesten Element erfolgen, also einem Element, das beispielsweise starr mit einem Gehäuse der optischen Vorrichtung verbunden ist, beispielsweise eine Flugkörperaußenhülle.

Das Verschwenken des Gesichtsfelds erfolgt relativ, also in Bezug zu einer vorbestimmten Richtung. Diese kann eine Rollachse sein, z.B. der optischen Vorrichtung, eines Suchkopfs oder eines Lenkflugkörpers, eine Symmetrieachse oder eine andere, im Vorhinein bestimmte Richtung. Das Verschwenken des Gesichtsfelds kann mithilfe einer Roll-Nick-Vorrichtung erfolgen, durch die das Gesichtsfeld, mit oder ohne eine Eingangsoptik, um eine Nickachse innerhalb eines Schwenkwinkelbereichs, beispielsweise +/-90 Grad, verschwenkt werden kann. Zusätzlich ist es vorteilhaft, wenn das Gesichtsfeld, beziehungsweise eine Eingangsoptik, um eine Rollachse gedreht werden kann, die zweckmäßigerweise eine Symmetrieachse der optischen Vorrichtung ist. Im Falle eines Lenkflugkörpers oder eines Suchkopfes dafür, ist die Rollachse zweckmäßigerweise die Rollachse des Lenkflugkörpers. Vorteilhafterweise kreuzen sich die Roll- und die Nickachse im Zentrum eines teilkugelförmigen Eintrittsfensters der Vorrichtung, beispielsweise eines Doms eines Suchkopfes, rechtwinklig.

Als Detektor ist ein Bildsensor vorteilhaft, beispielsweise ein Mehrelement-Matrixdetektor. Er ist vorzugsweise mittig und mit seiner Empfangsebene zumindest nahezu rechtwinklig zur Rollachse angeordnet. Dem Detektor ist die Detektoroptik vorgebaut. Der Detektor und die Detektoroptik sind vorzugsweise strukturfest beziehungsweise gehäusefest montiert. Es ist jedoch auch möglich, die Detektoroptik und insbesondere auch den Detektor rollend zu lagern, also um die Rollachse beweglich zu einem Gehäuse, beispielsweise in einem Rollrahmen. Das Gesichtsfeld ist vorzugsweise auf alle Punkte eines Halbraums richtbar, beispielsweise den vorderen Halbraum eines Flugkörpers. Hierzu ist es vorzugsweise um +/-90 Grad um eine Nickachse verschwenkbar und vorzugsweise um eine Rollachse 360° drehbar, wobei auch ein Rollen um eine Rollachse bei einer vorhandenen Nickverschwenkung als Verschwenkung bezeichnet werden kann. Das Gesichtsfeld des Detektors beträgt zweckmäßigerweise zwischen ±2 Grad und ±10 Grad um eine zentrale Richtung.

Das optische Gelenk enthält ein Umkehrprisma, wobei auch mehrere Umkehrprismen, insbesondere zwei Umkehrprismen vorteilhaft sind, die zweckmäßigerweise aufeinander gestapelt sind. Die Reflektionsflächen sind hierbei zweckmäßigerweise parallel zueinander angeordnet. Vorteilhafterweise werden alle optischen Eigenschaften des optischen Gelenks nur durch das zumindest eine Umkehrprisma erreicht, so dass auf zusätzliche Bauteile verzichtet werden kann. Weiter ist es vorteilhaft, wenn die Umkehrprismen des optischen Gelenks starr zueinander angeordnet sind, so dass die optischen Schwenkeigenschaften durch die zueinander starren Prismen zustande kommen. Auf diese Weise kann die Mechanik des optischen Gelenks einfach gehalten sein. Die optische Achse des optischen Gelenks kann parallel zur Mittenachse des aus dem Gesichtsfeld einfallenden oder vom Gelenk ausgerichteten Strahlenbündels sein.

Das Umkehrprisma ist ein Prisma mit zumindest einer Reflektionsfläche, an der der Strahlengang zumindest teilweise gespiegelt wird. Es ist vorzugsweise ein einziges Prisma mit einer Eintrittsfläche, zumindest einer von dieser verschiedenen Reflektionsfläche und zweckmäßigerweise mit einer von den beiden erstgenannten Flächen verschiedenen Austrittsfläche. Besonders geeignet ist eine Dachkantprisma, insbesondere ein Dove-Prisma. Zweckmäßigerweise ist das Umkehrprisma so in der optischen Vorrichtung angeordnet, dass der Strahlengang an nur einer Reflektionsfläche nur einmal gespiegelt wird. Die Spiegelfläche ist vorzugsweise eine Hypotenusenfläche des Prismas, sie ist zweckmäßigerweise verspiegelt, wobei die Verspiegelung jedoch nicht notwendig ist. Besonders vorteilhaft ist es, wenn die Firstlinie des Umkehrprismas parallel zur Nickachse verläuft. Der Kompaktheit ist es außerdem förderlich, wenn die Verschwenkachse beziehungsweise die Nickachse parallel zur Hypotenusenfläche verläuft, insbesondere in der Hypotenusenfläche liegt.

Entsprechend der Erfindung wird im Umkehrprisma ein in eine vordere Dachfläche fallendes paralleles Strahlenbündel zur Hypotenusenfläche hin gebrochen, dort reflektiert und an der hinteren Dachfläche erneut gebrochen und somit als gespiegeltes Strahlbündel ausgegeben. Zweckmäßigerweise bleiben die sonstigen optischen Strahleigenschaften unverändert. Auf diese Weise können die so gewonnenen hinteren Strahlbündel ohne weitere optische Maßnahmen in eine übliche Detektoroptik eingeführt werden. Wird das Umkehrprisma durch Drehung der Schwenkachse beziehungsweise Nickachse senkrecht zur Rollachse verschwenkt, so werden aus Sicht des Detektors die Strahlenbündel am Eingang der Prismen aufgrund der Spiegelung im Prisma um den doppelten Winkel gedreht. Eine mechanische Prismenverkippung um 45 Grad erzeugt somit die geforderte beziehungsweise vorteilhafte optische Schielwinkelkippung um 90 Grad.

Das Material des Umkehrprismas hängt von der verwendeten Strahlungsfrequenz ab. Zweckmäßigerweise ist der Detektor ein Infrarotdetektor und das Material des Umkehrprismas ist ein für infrarote Strahlung transparentes Material, insbesondere Silizium. Die Form des Umkehrprismas, insbesondere der Winkel zweier Dachflächen und einer Hypotenusenfläche des Umkehrprismas zueinander, kann vom Brechungsindex und somit von der Strahlungsfrequenz und dem Material abhängig gemacht werden. Insbesondere wird der Gesichtfelddurchmesser bei der Geometriewahl des Prismas berücksichtigt sein, da ein großes Gesichtsfeld mit einer großen Strahldivergenz, auch im Prisma, verbunden ist. So sollten vorteilhafterweise alle in das Umkehrprisma einfallenden Strahlen - auch unter verschiedenen Einfallswinkel entsprechend der Ausdehnung des Gesichtfelds - in Richtung zum Detektorobjektiv wieder aus dem Umkehrprisma herausgeführt werden.

Eine vorteilhafte Ausführungsform der Erfindung sieht vor, dass das Umkehrprisma eine parallel zur optischen Achse ausgerichtete Hypotenusenfläche aufweist. Die Ausrichtung der optischen Achse kann sich hierbei auf den Strahlengang vor dem Umkehrprisma beziehen, als zwischen der Objektszene und dem Umkehrprisma. Die Parallelität tritt zweckmäßigerweise bei unverschwenktem Gesichtsfeld auf. Auf diese Weise kann - unter der Verwendung der Hypotenusenfläche als Spiegelfläche - ein von vorne in das Umkehrprisma eintretender Strahl in gleicher Richtung nach hinten aus dem Umkehrprisma herausgeführt werden, sodass ein in der Strahlrichtung unveränderte Auslenkung des Strahls aus dem Umkehrprisma, verbunden mit einer jedoch für die Strahlrichtung belanglosen Bildspiegelung, ermöglicht wird.

Eine Verschwenkung des Gesichtsfelds um ±90 Grad kann in besonders einfacher Weise ermöglicht werden, wenn das optische Gelenk zwei im Strahlengang gleich wirkende Umkehrprismen aufweist, die zweckmäßigerweise im Strahlengang nebeneinander, übereinander oder allgemein: benachbart, angeordnet sind. Strahlung aus der Objektszene kann gleichzeitig auf die beiden Umkehrprisma gelenkt werden, die vorteilhafterweise parallel im Sinne von nicht seriell angeordnet sind. Die beiden Prismen können in mehreren Arten zueinander angeordnet sein, zweckmäßigerweise aufeinander gestapelt sein. Grenzen die beiden Umkehrprismen jedoch an ihren Hypotenusenflächen aneinander, so kann ein besonders kompaktes optisches Gelenk mit hoher Strahlungsausbeute geschaffen werden. Eine besonders kompakte Anordnung kann erreicht werden, wenn die beiden Umkehrprismen mit ihren Reflektionsflächen aufeinander liegen. Sie können hierbei einen optischen Würfel bilden.

Weiter ist es vorteilhaft, wenn beide Umkehrprismen- in Verbindung mit der Detektoroptik - jeweils ein Gesamtbild der Objektszene auf den Detektor abbilden. Diese Gesamtbilder liegen übereinander, sodass ein Punkt auf der Objektszene durch beide Umkehrprismen auf denselben Punkt am Detektor abgebildet wird.

Eine weitere vorteilhafte Ausführungsform der Erfindung sieht vor, dass die Verschwenkachse der Gesichtsfeldverschwenkung durch ein Symmetriezentrum des optischen Gelenks verläuft. Das Symmetriezentrum kann ein geometrischer Mittelpunkt, ein geometrisches Zentrum einer Spiegelebene, ein Gewichtsschwerpunkt, ein Mittelpunkt einer Kreuzungslinie zweier Symmetrieebenen oder dergleichen sein. Durch diese Anordnung kann das optische Gelenk besonders kompakt gehalten werden.

Die Anzahl der für das optische Gelenk verwendeten Umkehrprismen ist im Prinzip beliebig. So können auch mehr als zwei Umlenkprismen verwendet werden, die im Strahlengang übereinander, also parallel im Sinne von nicht seriell, angeordnet sind. Zweckmäßigerweise bildet jedes dieser Umkehrprismen das gesamt Gesichtsfeld auf dem Detektor ab. Eventuelle Abschattungen beeinträchtigen nicht ein solches Wirkprinzip. Die Umlenkprismen können aufeinander gestapelt sein. Hierzu sind sie zweckmäßigerweise mit einer parallel zur Hypotenusenfläche ausgeführten Fläche ausgestattet, sodass die parallelen Ebenen der Umkehrprismen aufeinander gelegt werden können. Auch die Verwendung von Mikroprismen ist vorteilhaft, deren Abmessung zweckmäßigerweise senkrecht zur Hypotenusenfläche weniger als 1 mm beträgt.

Im Prinzip steht der Wunsch nach einer kompakten Bauform dem Vorteil einer großen Eintrittsapertur der Vorrichtung entgegen. Um dennoch eine Eintrittsapertur der Vorrichtung zu erreichen, die größer als die Eintrittsapertur des optischen Gelenks ist, wird gemäß der Erfindung eine Eingangsoptik vor dem optischen Gelenk vorgesehen. Die Eingangsoptik ist so ausgeführt, dass sie den aus der Objektszene einfallenden Strahlengang verdichtet, so dass also der durch die Eintrittsapertur der Eingangsoptik tretende Strahlengang in der Austrittsapertur verdichtet ist, die Austrittsapertur beispielsweise kleiner als die Eintrittsapertur ist. Hierdurch kann der verdichtete Strahlengang unmittelbar auf das optische Gelenk gerichtet werden, das hierdurch klein gehalten werden kann. Auf diese Weise kann eine große Eintrittsapertur der optischen Vorrichtung mit einer kompakten Bauweise des optischen Gelenks verbunden werden.

Die Verdichtung der Eingangsoptik erfolgt um den Faktor von 1,2 bis 10. Der Faktor bezieht sich zweckmäßigerweise auf das Durchmesserverhältnis der Eintrittsapertur zur Austrittsapertur der Eingangsoptik. Zweckmäßigerweise ist die Eingangsoptik das erste optische Mittel der Vorrichtung, in das der unverändert von der Objektszene kommende Strahlengang zuerst auftrifft, gegebenenfalls abgesehen von einem Eintrittsfenster, beispielsweise einem Suchkopfdom.

Die Eingangsoptik vor dem optischen Gelenk, also zwischen dem optischen Gelenk und der Objektszene ist afokal, sodass ein paralleler Strahleneinfall von der Objektszene parallel auf das optische Gelenk gelenkt wird. Hierdurch können durch die Verschwenkung verursachte Bildfehler gering gehalten oder sogar vermieden werden.

Weiter wird vorgeschlagen, dass die Eingangsoptik optische Eigenschaften eines von der Umgebung mechanisch abschirmenden Eintrittfensters, beispielsweise eines Suchkopfdoms, ausgleicht. Der Ausgleich geschieht zweckmäßigerweise so, dass eine Afokalität zum optischen Gelenk erhalten bleibt. Im Sinne einer solchen afokalen Eingangsoptik kann das Eintrittsfenster auch als Bestandteil der Eingangsoptik verstanden werden.

Zum Vermeiden von durch eine Verschwenkung hervorgerufenen Bildstörungen ist es weiter vorteilhaft, wenn das optische Gelenk afokal ist. Hierdurch kann ermöglicht werden, dass der Strahlengang sowohl als auch nach dem optischen Gelenk parallel ist.

Das optische Gelenk führt einen Strahlengang einer Verschwenkung des Gesichtsfelds nach, sodass das Gesichtsfeld auf den Detektor abgebildet bleibt. Die Größe der Abbildung, beispielsweise ein flächiges Bild oder auch nur ein Punkt, ist hierbei unerheblich. Zum optischen Nachführen ist das optische Gelenk mit einem Rotationsmittel zum Drehen zumindest eines Teils des optischen Gelenks, insbesondere des gesamten optischen Gelenks, versehen. Das Rotationsmittel ist entsprechend der Erfindung so ausgeführt, dass das optische Gelenk mit stets dem halben Schwenkwinkel des Gesichtsfelds mitgeschwenkt wird. Hierbei werden zweckmäßigerweise alle optischen Elemente des optischen Gelenks synchron gedreht. Die Drehachse des Drehens ist zweckmäßigerweise die Verschwenkachse beim Verschwenken des Gesichtsfelds. Das Rotationsmittel kann ein Rotationsantrieb sein. Es ist jedoch bereits ausreichend, wenn es ein Lager aufweist, das zur einer Rotation des Gelenks dient.

Das Ausrichtmittel und das Rotationsmittel können getrennt voneinander angesteuert bewegt werden, wobei eine Synchronisierung der Bewegung zur Lagekonstanz der Abbildung des Gesichtsfelds auf den Detektor sinnvoll ist. Eine besonders einfache Synchronisierung kann erreicht werden, wenn das Ausrichtmittel und das Rotationsmittel mechanisch zwangsgekoppelt sind. Eine solche Zwangskopplung kann beispielsweise über ein Getriebe erfolgen.

Mechanische Belastungen bei einer solchen Zwangskopplung können gering gehalten werden, wenn ein Kraftfluss zum Drehen des Gelenks über das Ausrichtmittel in das Rotationsmittel geführt ist. Da das Ausrichtmittel mit dem doppelten Winkel wie das Rotationsmittel dreht, erfolgt hierdurch eine Untersetzung der Drehung, die mechanisch schonend ist.

Weiter ist es vorteilhaft, wenn eine Eingangsoptik und das optische Gelenk jeweils in ihrer Bewegung zum Verschwenken des Gesichtsfelds unabhängig voneinander gelagert sind. Die Lagerung kann in einem Rollrahmen erfolgen, so dass beide Elemente rollbar sind.

Die Erfindung ist außerdem gerichtet auf eine optische Vorrichtung zum Führen von Strahlung aus einer Objektszene auf einen Detektor mit einem Ausrichtmittel zum Verschwenken des Gesichtsfelds des Detektors relativ zu einer vorbestimmten Richtung und einem optischen Gelenk zum Führen des Strahlengangs aus dem verschwenkten Gesichtsfeld zum Detektor, z.B. in eine Detektoroptik. Es wird vorgeschlagen, dass die Vorrichtung erfindungsgemäß eine um das optische Gelenk geführte Abschirmung aufweist, die das optische Gelenk vor nicht durch die Ein- oder Austrittsapertur des optischen Gelenks einfallender Einstrahlung abschirmt. Zweckmäßigerweise schirmt die Abschirmung sämtliche von außen und nicht durch die Ein- oder Austrittsapertur einfallende Einstrahlung ab. Die Abschirmung muss sich selbstverständlich nicht auf die von der Abschirmung selbst abgestrahlte Strahlung, insbesondere infrarote Strahlung beziehen, sondern nur auf von außen einstrahlende Strahlung, insbesondere von außerhalb der Abschirmung. Störendes Streulicht kann somit verringert oder sogar vollständig vermieden werden. Dies ist besonders vorteilhaft, da ein mit einem Umlenkprisma ausgeführtes optisches Gelenk besonders große Eintrittsflächen ausweist, in die Störstrahlung eindringen und ohne eine Abschirmung auf den Detektor gelangen kann.

Selbstverständlich ist diese auf die Abschirmung gerichtete Erfindung auch mit der oben genannten Erfindung des Umkehrprismas für das optische Gelenk und mit allen mit dieser Erfindung beschriebenen Details kombinierbar.

Um sich an eine Bewegung des optischen Gelenks bei einer Verschwenkung gut anpassen zu können, ist es vorteilhaft, wenn die Abschirmung zumindest ein in der Flächenausdehnung variables Abschirmelement aufweist. Ein solches Abschirmelement kann beispielsweise ein Faltenbalg oder ein elastisches Element oder ein anderes geeignetes Element sein, das sich vergrößern und verkleinern lässt. Die Flächenvariation bezieht sich auf die Abschirmfläche.

Eine besonders vorteilhafte Weiterentwicklung sieht vor, dass eine mechanische Kopplung an eine Eingangsoptik vorhanden ist, die eine an eine Verschwenkung des Gesichtsfelds gekoppelte Flächenvariation bewirkt. Auf diese Weise kann auf einen eigenen Antrieb zur Flächenvariation verzichtet werden.

Besondern reibungsarm und somit schnell und mit geringem Kraftaufwand bewegbar ist die Abschirmung, wenn sie zumindest eine Abwicklung aufweist und das Abschirmelement abwickelbar ist. Das Abschirmelement ist zweckmäßigerweise auf der Abwickelvorrichtung aufgewickelt und kann während des Betriebs der optischen Vorrichtung zumindest teilweise abgewickelt werden, insbesondere entsprechend einer Flächenvariation beziehungsweise einer Verschwenkung des Gesichtsfeld.

Außerdem wird vorgeschlagen, dass das Abschirmelement in seiner Bewegung mit einer Bewegung einer Eingangsoptik mechanisch zwangsgekoppelt ist. Hierbei ist zweckmäßigerweise ein Kraftfluss zur Bewegung über ein an der Eingangsoptik angreifendes Element geführt. Auf diese Weise kann die Eingangsoptik beziehungsweise das daran angreifende Element die Bewegung des Abschirmelements und insbesondere seine Flächenvariation bewirken. Ein Kraftfluss kann von einem Gehäuse über das Element auf das Abschirmelement verlaufen.

Durch die Verwendung eines Umkehrprismas erfolgt eine Bilddrehung auf dem Detektor bei einem Verschwenken des Gesichtsfelds. Selbstverständlich ist es möglich und vorteilhaft, diese Bilddrehung mit einem optischen Element zu korrigieren. Eine besonders kompakte Lösung besteht jedoch darin, ein Prozessmittel vorzusehen, das dazu vorbereitet ist, eine Bildverlagerung, also Bilddrehung oder dergleichen - verallgemeinert als Bildverschiebung bezeichnet - zu ermitteln. Anhand der ermittelten Daten kann die Bildverschiebung mit Mitteln der Bildverarbeitung korrigiert beziehungsweise rückgerechnet werden. Die Ermittlung erfolgt zweckmäßigerweise im Bildtakt. Die Bildverschiebung kann durch das Verschwenken des Gesichtsfelds und/oder eine Eintrittsfensterausrichtung zur Objektszene bewirkt sein, also beispielsweise durch eine Flugrichtungsänderung eines Lenkflugkörpers. Zweckmäßigerweise stellt das Prozessmittel Bildkorrekturdaten einer Bildverarbeitung zur Verfügung. Hierdurch kann die Bildverschiebung korrigiert beziehungsweise rechnerisch eliminiert werden.

Zwischen dem optischen Gelenk und der Detektoroptik kann in besonders einfacher Weise ein paralleler Strahlengang hergestellt werden. Ein solcher Ort ist besonders geeignet zur Aufnahme eines Funktionsmoduls zur dämpfenden Beeinflussung des Strahlengangs, zur spektralen optischen Beeinflussung des Strahlengangs und/oder zur Ein- oder Auskoppelung von Strahlung in bzw. aus dem Strahlengang. Auch andere Beeinflussungen sind möglich. Das Funktionsmodul kann ein passives oder aktives Modul sein, das Strahlung nur empfängt bzw. nur oder auch aussendet, wie einen Laserstrahl. Die Parallelität bezieht sich auf parallel in die Eintrittsapertur der optischen Vorrichtung einfallende Strahlen. Wegen eines flächigen Gesichtsfelds liegen natürlich nicht nur parallele Strahlen vor, wobei diese Nichtparallelität jedoch nicht im Widerspruch zum hier verwendeten Begriff des parallelen Strahlengangs steht.

Die Erfindung ist außerdem gerichtet auf einen Suchkopf für einen Lenkflugkörper mit einer wie oben beschriebenen optischen Vorrichtung. Zweckmäßigerweise umfasst der Suchkopf ein teilkugelförmiges Eintrittsfenster in Form eines Doms mit einem Kugelzentrum. Der Suchkopf kann besonders kompakt beziehungsweise lichtstark ausgeführt werden, wenn die Schwenkachse der Gesichtsfeldverschwenkung durch das Kugelzentrum verläuft. Insbesondere ist auch das Symmetriezentrum des optischen Gelenks im Kugelzentrum angeordnet.

Außerdem ist die Erfindung auf einen Lenkflugkörper mit einem wie oben beschriebenen Suchkopf gerichtet.

Weiter ist die Erfindung gerichtet auf ein Verfahren zum Führen von Strahlung aus einer Objektszene auf einen Detektor oder von einer Strahlungsquelle in Richtung einer Objektszene. Zur Vereinfachung wird im Folgenden nur vom Führen der Strahlung auf den Detektor die Rede sein, wobei die Ausführung der aktiven Abstrahlung durch das optische Gelenk in die Objektszene hierbei eingeschlossen sein soll. Bei dem Verfahren wird ein Gesichtsfeld des Detektors relativ zu einer vorbestimmten Richtung verschwenkt und Strahlung aus dem Bereich des Gesichtsfelds aus der Objektszene wird durch ein optisches Gelenk und eine Detektoroptik auf den Detektor geführt.

Es wird vorgeschlagen, dass das optische Gelenk erfindungsgemäß ein Umkehrprisma aufweist, das bei einer Verschwenkung des Gesichtsfelds um einen Schwenkwinkel um den halben Schwenkwinkel mit verschwenkt wird. Auf diese Weise kann die Wirkweise eines Spiegels Verwendung finden und von vorne einstrahlende Strahlung kann 180 Grad nach hinten weitergegeben werden. Hierdurch kann die Objektszene besonders kompakt abgetastet beziehungsweise ausgeleuchtet werden.

Weitere Vorteile ergeben sich aus der folgenden Zeichnungsbeschreibung. In der Zeichnung sind Ausführungsbeispiele der Erfindung dargestellt. Weder ist die Erfindung auf diese Ausführungsbeispiele beschränkt - auch nicht in Bezug auf funktionale Merkmale, noch sind die Ausführungsbeispiele getrennt voneinander zu sehen. So können in jeder Weise dazu geeignete Merkmale eines jeden Ausführungsbeispiels auch explizit isoliert betrachtet, aus einem Ausführungsbeispiel entfernt und/oder in ein anderes Ausführungsbeispiel zu dessen Ergänzung eingebracht werden.

Es zeigen:
- Fig. 1: einen Lenkflugkörper mit einem Suchkopf,
- Fig. 2: den Suchkopf des Lenkflugkörpers aus Figur 1 in einer schematischen Schnittdarstellung,
- Fig. 3: die Eingangsoptik und das optische Gelenk des Suchkopfs aus Figur 2 in einer perspektivischen Darstellung, einschließlich einem Abschirmelement,
- Fig. 4: eine schematische Schnittzeichnung einer Draufsicht auf den Suchkopf aus Figur 2,
- Fig. 5-7: Strahlengänge durch die optische Vorrichtung des Suchkopfs bei nach vorne gerichteter Eingangsoptik, schräg zur Seite und 90 Grad gekippter Eingangsoptik,
- Fig. 8: eine Abschirmung um ein optisches Gelenk des Suchkopfs in einer teilgeschnittenen Darstellung,
- Fig. 9: eine schematische Darstellung eines Funktionselements innerhalb der optischen Vorrichtung,
- Fig. 10: ein optisches Gelenk mit zwei auf einer Schmalseite aufeinander gestapelten Umkehrprismen,
- Fig. 11: ein optisches Gelenk mit einem einzigen Umkehrprisma,
- Fig. 12: ein alternatives optisches Gelenk mit einem einzigen Umkehrprisma,
- Fig. 13: ein weiteres optisches Gelenk mit zwei Umkehrprismen und
- Fig. 14: eine weitere Ausführungsform eines optischen Gelenks mit einer Vielzahl von Umkehrprismen.

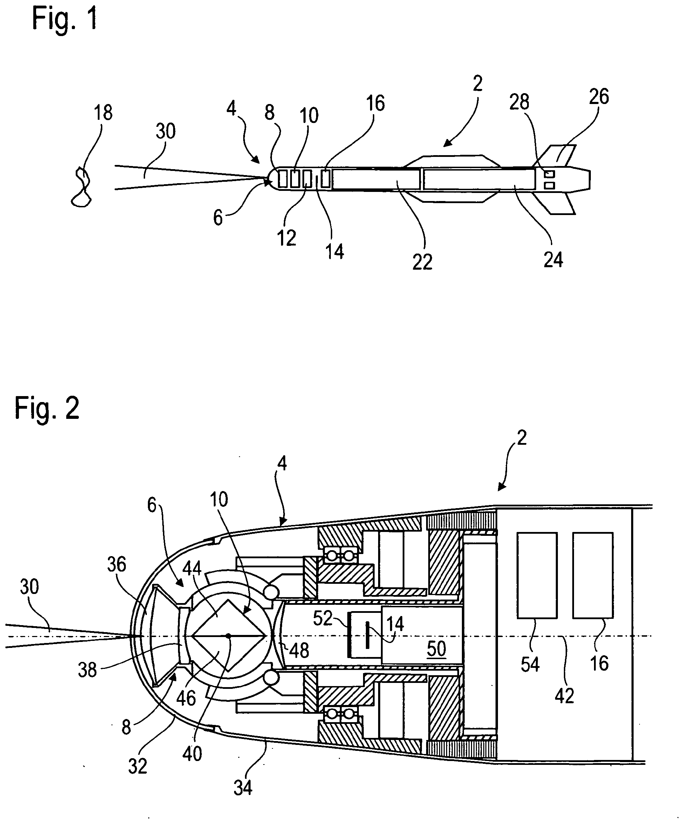

Figur 1 zeigt einen Lenkflugkörper 2 mit einem Suchkopf 4, der eine optische Vorrichtung 6 aufweist mit einer Eingangsoptik 8, einem optischen Gelenk 10, einer Detektoroptik 12 und einen Detektor 14. Eine Steuereinheit 16 des Lenkflugkörpers 2 dient zum Steuern der beweglichen Teile der optischen Vorrichtung 6 und zur Durchführung einer Bildverarbeitung von Bildern einer Objektszene 18, die durch die optische Vorrichtung 6 auf den Detektor 14 abgebildet wurde. Außerdem enthält der Lenkflugkörper 2 einen Wirkeinsatz 22, einen Raketenmotor 24, ein Leitwerk 26, das von Aktuatoren 28, die von der Steuereinheit 16 anhand von Signalen der Bildverarbeitung angesteuert werden, bewegt wird.

Eine schematische Schnittzeichnung in einer Draufsicht auf den Suchkopf 4 ist in Fig. 2 dargestellt. Der Suchkopf 4 ist mit einem transparenten Dom 32 aus beispielsweise Saphir ausgestattet, der fest in die Außenhülle 34 des Lenkflugkörpers 2 eingefügt ist. Hinter dem Dom 32 ist die optische Vorrichtung 6 angeordnet, wobei der Dom 32 als Bestandteil der optischen Vorrichtung 6 oder separate Einheit aufgefasst werden kann. Die Eingangsoptik 8 ist mit zwei Linsen 36, 38 ausgestattet, die gemeinsam um eine Nickachse 40 verschwenkbar und eine Rollachse 42 des Lenkflugkörpers 2 rotierbar sind. Die Verschwenkbarkeit um die Nickachse 40 beträgt ±90 Grad, sodass das Gesichtsfeld 30 der optischen Vorrichtung 6 beziehungsweise des Detektors 14 in den gesamten vorderen Halbraum verschwenkbar ist. Die Größe des rechteckigen Gesichtsfelds des Detektors 14 ist ca. 3° x 3°, wobei dessen Gesichtsfeld 30 in die Objektszene 18 durch die Eingangsoptik 8 kreisförmig ±3° ist und somit einen Durchmesser von etwa 6° aufweist.

Das optische Gelenk 10 umfasst zwei Umkehrprismen 44, 46, die jeweils an ihrer Hypotenusenfläche aufeinander gelegt sind. Zusammen bilden die beiden Umkehrprismen 44, 46 einen optischen Würfel, der ebenfall um die Nickachse 40 verschwenkbar ist und um die Rollachse 42 gedreht werden kann.

Zwischen dem optischen Gelenk 10 und dem Detektor 14 ist eine durch eine Linse 48 schematisch dargestellte Detektoroptik 10 angeordnet, durch die der Ausschnitt des Gesichtsfelds 30 der Objektszene 18 auf den Detektor 14 abgebildet wird. Der Detektor 14 ist ein Infrarot-Detektor, der im mittleren Infrarot empfindlich ist. Es sind jedoch auch beliebige andere Spektralempfindlichkeiten möglich und vorteilhaft. Zum Kühlen des Detektors 14 ist ein Kühler 50 vorhanden, dessen Kühlerfenster 52 zwischen der Detektoroptik 12 und den Detektor 14 angeordnet ist. Im hinteren Bereich des Suchkopfs 4 sind eine inertiale Messeinheit 54 und die Steuereinheit 16 angeordnet, die jeweils nur schematisch angedeutet sind.

Der Detektor 14 ist als Bildsensor in Form eines Matrixdetektors mit einer Vielzahl von matrixförmig angeordneten Detektorelementen ausgeführt, dessen Flächenzentrum auf der Rollachse 42 und damit bei jedem Nickwinkel immer auf der optischen Achse, also im Zentrum des Gesichtsfelds 30 liegt.

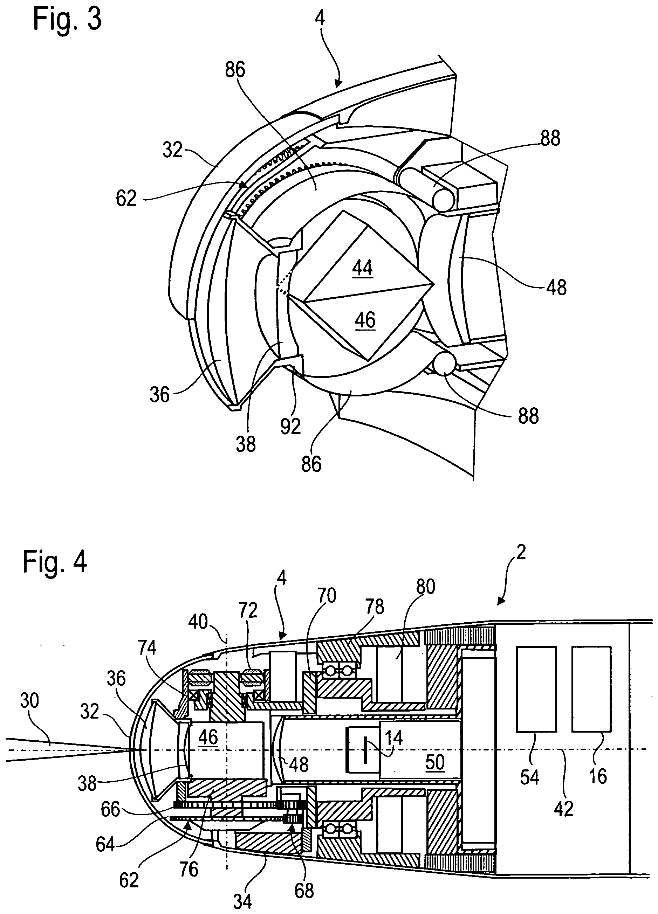

Fig. 3 zeigt eine leicht schematisierte perspektivische Ansicht auf den vorderen Teil des Suchkopfs 4. Die Darstellung ist entsprechend der Fig. 2 in einem senkrechten Schnitt gezeichnet, sodass die beidem Umkehrprismen 44, 46 sowie die Linsen 36, 38, 48 in der Mitte geschnitten dargestellt sind. Weitere Einzelheiten im unteren Bereich des Suchkopfs 2 sind weggelassen, ebenso wie die untere Hälfte des Doms 32.

In Fig. 4 ist der Suchkopf 4 in einer geschnittenen Ansicht von unten dargestellt, sodass beispielsweise hinsichtlich des optischen Gelenks 10 von unten auf das Umkehrprisma 46 geschaut wird.

### Optische Elemente und Strahlengang

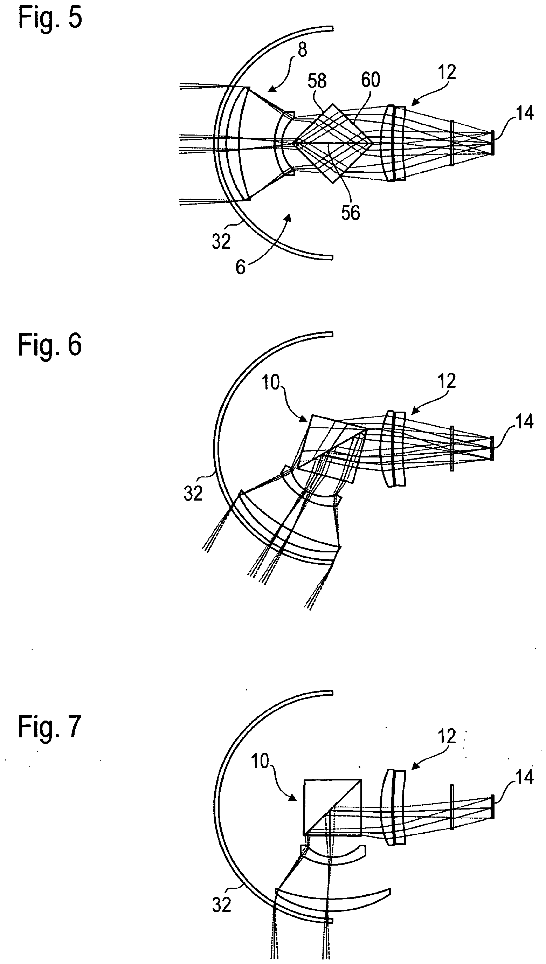

Anhand der Schnittbildzeichnung aus Fig. 2 und den Strahlengangzeichnungen aus den Figuren 5, 6 und 7 wird im Folgenden die optische Abbildung von Objekten aus der Objektszene 18 auf den Detektor 14 erläutert. Zu detektierende Strahlung kommt aus dem Sichtszenarium des Suchkopfs 4 mit Hintergrund- und Zielobjekten, die im Gesichtsfeld 30 zu liegen kommen. Das Gesichtsfeld 30 wird im Betrieb durch Drehung einzelner Optikelemente mittels eines Roll-Nick-Rahmensystems ausgerichtet. Die Ausrichtung erfolgt zum Beispiel durch einen Pilot eines den Lenkflugkörper tragenden Flugzeugs oder durch ein Radar des Trägerflugzeugs. Der genutzte Winkel der Eintrittsstrahlung variiert im Sichtwinkelbereich der Optik um circa ±3 Winkelgrade zu ihrer mittigen optischen Achse, der Sichtlinie des Suchkopfs 4. Damit und infolge der relativ weiten optischen Arbeitsentfernung bei der Zielerkennung und Zielverfolgung durch den Suchkopf 4 bilden sich die Objekte des Szenariums aus nahezu paralleler Strahlung auf den Detektor 14 ab.

Die Eintrittsapertur der um die Nickachse 40 und Rollachse 42 schwenkbaren Eingangsoptik 8 ist durch die Öffnung der Eintrittslinse 36 aber auch durch die Abschattung des Domrandes bei großen Schielwinkeln bestimmt, wie in Fig. 7 dargestellt ist. Bis zu einer Nickauslenkung von 60° von der Rollachse 42, die die Axialrichtung des Lenkflugkörpers 2 ist, findet keine Domabschattung statt, wie in Fig. 6 zu sehen ist. Es kann die volle Eintrittsapertur der Eintrittslinse 36 genutzt werden. Ab etwa 60° Nickwinkelauslenkung beginnt die Domabschattung, die sich bis 90° Nickwinkelauslenkung auf etwas 50 % erhöht. Dieser prinzipbedingte Effekt bewirkt bei einer so großen Nickwinkelauslenkung eine um circa 30% reduzierte Auffassreichweite des Suchkopfs 4. Für den symmetrischen, kugelabschnittsförmigen Dom 32 gilt dies für jede Position beziehungsweise Ausrichtung des Gesichtsfelds 3 um die Rollachse 42 mit entsprechenden Nickwinkeln.

Die Eingangsoptik 8 ist als thermisch stabiles Afokal ausgeführt, sie ist also eine afokale Optik. Ein paralleler Strahlengang, in den Figuren 5 bis 7 durch durchzogene Linien dargestellt, wird somit durch die Eingangsoptik 8 parallel auf das optische Gelenk 10 geführt. Allerdings wird der Strahlengang verdichtet, im gezeigten Ausführungsbeispiel um den Durchmesserfaktor 2 beziehungsweise Flächenfaktor 4, wobei auch andere solche Verhältnisse aus Eintrittsapertur zu Austrittsapertur zwischen 1,1 und 10 denkbar und vorteilhaft sind. Besonders vorteilhaft ist es daher, dass die Eintrittsoptik 8 die Eintrittsstrahlung in ein optisches äquivalentes jedoch verdichtetes Strahlenbündel umsetzt. Je nach Dom 32 ist es herbei möglich und gegebenenfalls vorteilhaft, die optische Wirkung des Doms 32 zu kompensieren, sodass sich das Afokal und die äquivalente Umsetzung auf die Eintrittsstrahlung vor dem Dom 32 beziehen. Aus optischer Sicht und Sicht der Wuchtung und Massenträgheit sind leichte Linsen 36, 38 vorteilhaft, beispielsweise aus Silizium.

Die Umlenkung des Strahlenbündels erfolgt über den symmetrisch im Domzentrum und um die Nickachse 40 und Rollachse 42 drehbar angeordneten Prismenblock, der hinsichtlich der optischen Elemente das optische Gelenk 10 bildet. Dessen zwei gleiche und gleichschenklige Umkehrprismen, in diesem Ausführungsbeispiel Dove-Prismen, sind jeweils an ihrer Hypotenusefläche 56 deckend aufeinander gelegt. Die Querachsen der Hypotenusefläche 56 liegen damit auf der Nickachse 40 und das Flächenzentrum der Hypotenusefläche 56 im Domzentrum, in dem sich auch die Nickachse 40 und die Rollachse 42 kreuzen. Das Symmetriezentrum des optischen Gelenks 10 liegt in der Verschwenkachse beziehungsweise Nickachse 40.

Einfallende Strahlen werden an der Eintrittsfläche 58 der beiden Umkehrprismen 44, 46 zur Hypotenusefläche 56 hin gebrochen und dort zur Austrittsfläche 60 reflektiert, in der die Strahlen das Umkehrprisma 44 beziehungsweise 48 wieder verlassen. Die Hypotenusenflächen 56 der Prismen 44, 46 können hierbei verspiegelt sein, um einen Reflektionsanteil zu erhöhen. Diese Verspiegelung kann für die Verwendung bei bestimmten Spektren vorteilhaft sein. Die Hypotenuseflächen 56 sind bei unverschwenktem Gesichtsfeld parallel zur optischen Achse des Strahlengangs vor der optischen Vorrichtung 6 und parallel zur optischen Achse des Strahlengangs vor dem optischen Gelenk 10 ausgerichtet.

Aufgrund der bekannten optischen Wirkfunktion eines Dove-Prismas wird das Strahlenbündel aus der Eingangsoptik 8 über beide Umkehrprismen 44, 46 exakt mit dem doppelten Winkel zur einfallenden Strahlrichtung um die Nickachse 40 und in Richtung längs zur Rollachse 42 gelenkt. Das einfallende Pupillenbündel fällt hierbei auf beide Prismen 44, 46 und wird hierdurch geteilt, gespiegelt und optisch versetzt ausgegeben. In beiden resultierenden Strahlbündeln bleiben jedoch die abbildenden optischen Eigenschaften erhalten, sodass letztendlich auf dem Detektor 14 zwei sich deckende Abbildungen des Gesichtsfelds-Szenariums erzeugt werden. Ist das Gesichtsfeld 30 parallel zur Rollachse 42 und somit zur Symmetrieachse der optischen Vorrichtung 6 ausgerichtet, so wird das einfallende Pupillenbündel exakt hälftig auf die beiden Umkehrprismen 44, 46 aufgeteilt. Dies ist in Fig. 5 abgebildet. Mit zunehmenden Nickwinkel wird das einfallende Pupillenbündel immer asymmetrischer auf nur eines der Umkehrprismen 44, 46 abgebildet, wobei bei einem Nickwinkel von 90° das Pupillenbündel nur noch vollständig auf eines der Umkehrprismen 44, 46 abgebildet wird, wie in Fig. 7 dargestellt ist.

Die beiden Umkehrprismen 44, 46 sind aus Silizium gebildet und zeichnen sich damit durch eine im Infraroten sehr günstige Brechzahl und eine thermische Stabilität aus. Vorteilhaft ist ferner das niedrige Gewicht, das für eine Anwendung in Flugkörpern vorteilhaft ist.

Die Detektoroptik 12 ist eine abbildende Optik, die auch ohne die Eingangsoptik 8 und das optische Gelenk 10 zur Abbildung der Objektszene 18 einsetzbar wäre. Insofern sind die drei optischen Einheiten Eingangsoptik 8, optisches Gelenk 10 und Detektoroptik 12 voneinander unabhängig einsetzbar. Sie sind auch unabhängig voneinander thermisch passiviert.

### Mechanischer Aufbau

Die Winkelverdopplung des optischen Gelenks 10 erfordert, dass der Prismenblock gegenüber der Eintrittsoptik 8 - ausgehend von der Nullposition des Rahmensystems parallel zur Rollachse 42, also bei einem Schielwinkel von 0°, bis zur maximalen Nickauslenkung - stets nur um den halben Nickwinkel gedreht werden darf. Dazu ist die Eingangsoptik 8 auf der Nickachse 40 gegenüber dem optischen Gelenk 10 mechanisch getrennt drehbar gelagert. Eine 2:1-Kopplung der Drehwinkel kann hierbei durch eine separate Drehansteuerung der beiden Elemente erfolgen. Im gezeigten Ausführungsbeispiel erfolgt die mechanische Kopplung jedoch durch ein Getriebe 62, insbesondere ein Zahnradgetriebe (siehe Figuren 3 und 4). Das Getriebe 62 umfasst ein erstes Zahnrad 64 und ein zweites Zahnrad 66, die über zwei fest miteinander gekoppelte Stirnräder 68 miteinander verbundnen sind. Das erste Zahnrad 64 ist starr mit dem Prismenblock verbunden und das zweite Zahnrad 66 mit der Eingangsoptik 8. Durch die Getriebeverbindung der Stirnräder 68 sind die beiden Zahnräder 64, 66 starr in einem Rotationsverhältnis von 2:1 miteinander verbunden.

Der Nickbewegungsantrieb sowohl der Eingangsoptik 8 als auch des optischen Gelenks 10 erfolgt bei diesem Ausführungsbeispiel über einen elektromagnetischen Direktantrieb 72, der sich am Rollrahmen 70 abstützt. Der Antrieb 72 ist in Fig. 4 gegenüber dem Getriebe 62 dargestellt, es ist jedoch möglich ihn im Getriebe 62 zu integrieren. Im gezeigten Ausführungsbeispiel treibt der Antrieb 72 die Nickbewegung der Eingangsoptik 8 direkt und des optischen Gelenks 10 indirekt über die Nickbewegung der Eingangsoptik 8 an. Ein Kraftfluss erfolgt hierbei vom Rollrahmen 70 über den Antrieb 72 auf eine Stützstruktur 74 der Eingangsoptik 8 und von dort über das Getriebe 62 auf eine Stützstruktur 76 des optischen Gelenks 10. Durch die Winkelkopplung wird der Kraftfluss durch das Getriebe 62 um das Verhältnis 2:1 untersetzt, wodurch ein verschleißarmer Betrieb der Mechanik und insbesondere des Getriebes 62 erfolgen kann. Auch die Lagerung des optischen Gelenks 10 beziehungsweise von dessen Stützstruktur 76 kann an der Eingangsoptik 8 beziehungsweise dessen Stützstruktur 74 erfolgen. Im gezeigten Ausführungsbeispiel sind diese beiden Elemente jedoch separat und unabhängig voneinander, also nicht übereinander, im Rollrahmen 70 gelagert.

Der Antrieb 72 kann als Ausrichtmittel zum Verschwenken des Gesichtsfelds 18 gesehen werden. Als Ausrichtmittel kann auch die Lagerung der Stützstruktur um die Nickachse 42 verstanden werden.

Der Rollrahmen 70 ist um die Rollachse 42 drehbar zu einer Gehäusestruktur 78 gelagert, die fest und starr mit der Außenhülle 34 des Suchkopfs 4 beziehungsweise des Lenkflugkörpers 2 verbunden ist. Der Rollantrieb erfolgt hierbei über einen Direktantrieb 80 zwischen dem Rollrahmen 70 und der Gehäusestruktur 78. Da die Eingangsoptik 8 und das optische Gelenk 10 im Rollrahmen 70 gelagert sind, sind diese auch drehbar um die Rollachse 42.

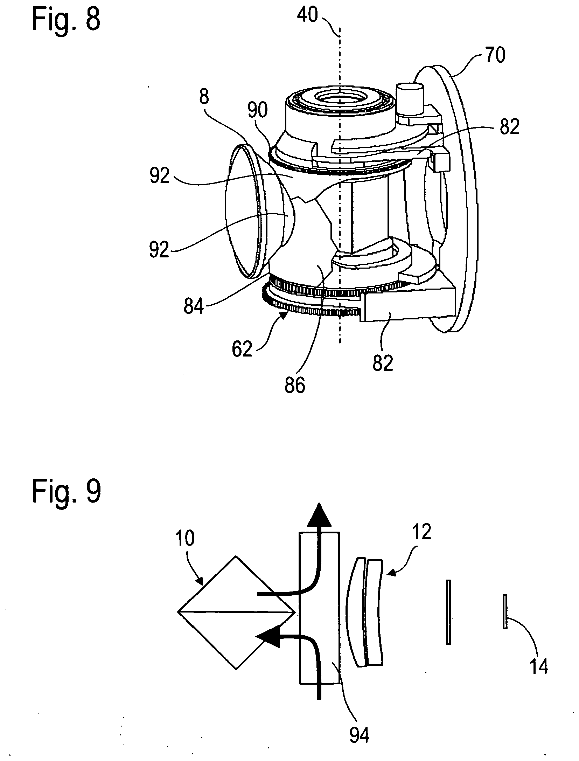

Der Rollrahmen 70 beziehungsweise dessen Strukturplatte ist in Fig. 8 perspektivisch dargestellt. Im linke Bildteil ist die Eingangsoptik 8 dargestellt die mit einer an den Rollrahmen 70 angeformten Lagergabel 82 im Rollrahmen 70 gehalten und um die Nickachse 40 schwenkbar gelagert ist. Im Inneren der Lagergabel 82 ist der Prismenblock erkennbar, der über das unten auf der Achse sichtbare Getriebe 62 mit dem unteren Gabelschenkel verbunden ist.

Durch die offenen Prismenstruktur des optischen Gelenks ist das optische Gelenk 10 und auch die Eintrittslinse 48 der Detektoroptik 12 nur unzureichend gegen äußere Strahlung und innere Streustrahlung geschützt. Daher ist die optische Vorrichtung 6 durch eine um das optische Gelenk 10 geführte Abschirmung 84 vor äußerer Strahlung und innerer Streustrahlung abgeschirmt. Die Abschirmung 84 enthält ein Abschirmelement 86 in Form einer Metallfolie. Im gezeigten Ausführungsbeispiel ist dieses metallische und flexible Schirmband in Fig. 8 teilgeschnitten dargestellt, um den innen liegenden Prismenblock und das unter der Metallfolie liegende Element 92 sichtbar zu machen, das starr mit der Eingangsoptik 8 verbunden ist und auf dem das Abschirmelement 86 aufliegt. Dieses Element ist zumindest im hinteren Bereich um das Gelenk 10 geführt und mit einer Öffnung versehen, durch das der aus dem Gelenk 10 austretende Strahlengang hindurch treten kann, und zwar in jeder Betriebs-Winkelstellung der Eingangsoptik 8. Das Abschirmelement 86 ist an der Eingansoptik 8 befestigt und kann außerdem die Lagergabel 82 zumindest teilweise überdecken. Das Abschirmelement 86 ist in Fig. 3 ungeschnitten zu erkennen. Das Material des Abschirmelements 86 kann je nach Anwendung variieren. Die Verwendung eines metallischen Abschirmelements 86 ist besonders vorteilhaft, da damit auch störende Radarstrahlung abgeschirmt werden kann, die durch Kunststoff ggf. hindurch treten würde.

Das Abschirmelement 86 ist bei einteiliger Ausführung um das optische Gelenk 10 beidseitig oder bei zweiteiliger Ausführung an zumindest einer Seite auf Rollen 88 beziehungsweise einer Rolle 88 aufgewickelt und wird bei einer Nickbewegung der Eingangsoptik 8 ein- beziehungsweise ausgerollt. Hierdurch kann eine zur Nickbewegung verschiebungsfreie Bewegung des Abschirmelements 86 erreicht werden, wodurch dieses kräftearm und verschleißarm stets mit der Nickbewegung mitgeführt wird. Die Rolle 88 beziehungsweise beide Rollen 88 sind über eine mechanische Kopplung mit einer Nickbewegung gekoppelt, sodass sie bei einer Nickbewegung automatisch mit auf- beziehungsweise abgewickelt werden. Im dargestellten Ausführungsbeispiel erfolgt diese mechanische Kopplung über eine Zahnradkopplung 90, die in Fig. 8 zu sehen ist. Jede Rolle 88 ist hierbei mit einem Stirnrad ausgestattet, das auf einem Großrad der Zahnradkopplung 90 kämmt, das direkt mit der Nickrotation mitdreht. Hierdurch wird ein Auf- beziehungsweise Abrollen der Rolle 88 direkt angetrieben, ohne dass eine Kraftübertragung über das Abschirmelement 86 notwendig ist.

Durch das Auf- oder Abrollen ist das Abschirmelement 86 ein in der Flächenausdehnung variables Element, wobei eine mechanische Kopplung an die Eingangsoptik 8 eine an eine Verschwenkung um die Nickachse gekoppelte Flächenvariation der Abschirmfläche bewirkt. Das Abschirmelement 86 ist hierbei in seiner Bewegung mit der Bewegung der Eingangsoptik 8 mechanisch zwangsgekoppelt, wobei ein Kraftfluss zur Bewegung des Abschirmelements über Eingangsoptik 8 beziehungsweise ein daran angreifendes Element 92 geführt ist. Durch die Abschirmung 84 ist das optische Gelenk 10 vor sämtlicher nicht durch die Ein- oder Austrittsapertur des optischen Gelenks 10 fallender Einstrahlung abgeschirmt.

Wie erwähnt ist die optische Vorrichtung 4 durch drei Einheiten 8, 10, 12 gekennzeichnet, die im Wesentlichen voneinander unabhängig sind. Insofern können die Abstände zwischen diesen Einheiten 8, 10, 12 in der Längsachse beziehungsweise Rollachse 42, beziehungsweise der Symmetrieachse der optischen Vorrichtung 4 in ihren Abständen zueinander variiert werden. Durch den parallelen Strahlengang wird die optische Wirkweise der Elemente 8, 10, 12 zueinander hierbei nicht beeinflusst, wobei jedoch die Strahldivergenz, verursacht durch die Ausdehnung des Gesichtsfelds 30 zu berücksichtigen ist. Insofern ist die optische Vorrichtung 4 besonders dazu geeignet, ein oder mehrere Funktionsmodule aufzunehmen, welches beziehungsweise welche zwischen den einzelnen Elementen 8, 10, 12 angeordnet sein können.

Ein solches Anordnungsbeispiel ist in Fig. 9 schematisch skizziert. Das Funktionsmodul 94 ist zwischen dem optischen Gelenk 10 und der Detektoroptik 12 angeordnet. Ein solches Funktionsmodul 94 kann zur Realisierung einer aktiven Temperaturstabilisierung verwendet werden. Ebenfalls möglich ist ein optisch aktives Element, beispielsweise ein Laser. Auch Strahlteiler sind denkbar und vorteilhaft, Filter oder andere den einfallenden oder nach außen gerichteten Strahlengang beeinflussende optische Elemente. Weiter vorteilhaft ist auch eine Blendungsabschirmung, die bei einer Blendung von außen zwischen die Elemente 10, 12 eingefahren werden kann oder dauerhaft dort angeordnet ist und entsprechend aktiviert wird. Das erforderliche Regelkommando für ein Funktionsmodul 94 kann über die Bildauswertung in der Suchkopfsignalverarbeitung bereitgestellt werden. Bei einer Anordnung zwischen den Elementen 8, 10, 12 liegt ein paralleler Strahlengang vor, der eine einfache optische Beeinflussung, z.B. eine dämpfende oder spektrale optische Beeinflussung, erlaubt. Die Parallelität bezieht sich auf parallel in die Eintrittsapertur der optischen Vorrichtung einfallende Strahlen. Wegen des flächigen Gesichtsfelds 30 treten natürlich auch nicht parallele Strahlen aus der Objektszene 18 in die Eintrittsapertur, deren Nichtparallelität auch zwischen den Elementen 8 und.10 bzw. 10 und 12 wiedergegeben ist. Diese Nichtparallelität steht jedoch nicht im Widerspruch zum hier verwendeten Begriff des parallelen Strahlengangs, der sich auch parallel einfallende Strahlen bezieht.

Im parallelen Strahlengang zwischen den Elementen 8 und 10 und insbesondere zwischen den Elementen 10 und 12 lassen sich mit relativ geringem baulichen Aufwand optische Signale, die zum Beispiel Entfernungsinformationen, Identifikationsinformationen oder Messinformationen beinhalten, im optisch wirkenden Gesichtsfeld 30 ein- und ausgeben. Durch die Parallelität des Strahlengangs ist somit ein Funktionsmodul 94 dort besonders einfach und mit geringen Anforderungen an das Funktionsmodul 94 und die Anpassung der optischen Vorrichtung an das Funktionsmodul 94 integrierbar.

Ein Funktionsmodul 94 erhöht die Baulänge der optischen Vorrichtung 4 um mindestens die Baulänge des Funktionsmoduls 94 und aufgrund der Gesichtsfeldausdehnung muss zumindest als weitere Folge die Eintrittsapertur der Detektoroptik 12 angepasst, also aufgeweitet werden.

### Bildverarbeitung

Mithilfe der optischen Vorrichtung 4 kann der Ausschnitt des Gesichtsfelds 30 aus der Objektszene 18 auf den Detektor 14 abgebildet werden. Sind Bildvergleiche über ein oder mehrere aufeinander folgende Bilder durchzuführen, muss zu jedem Bild eine eindeutige Positionsinformation vorliegen. Hierzu sind verfälschende Effekte, die sich aus der Ausführung durch die Dove-Prismen im Prismenblock ergeben, zu berücksichtigen. Der Effekt des doppelten Nickwinkels ist zumindest teilweise bereits mechanisch durch die Getriebekopplung des Getriebes 62 zwischen der Eingangsoptik 8 und dem Prismenblock des optischen Gelenks 10 kompensiert. Wesentlich komplexer ist die Kompensation der Verdopplung der Bilddrehung im Umkehrprisma. Hierzu ist die Steuereinheit 16 mit einem speziellen Rechenmodul ausgestattet, in dem alle relevanten Bilddaten, beispielsweise zur letzten Bildposition gemessen oder errechnet, auf die zwischenzeitlich erfolgte Bildverschiebung und insbesondere auf die erfolgte Bilddrehung des nächsten Bildes umgerechnet werden können. Dies ist anhand der gemessenen Differenzen von Roll- und Nickwinkel sowie der inertialen Messwinkeldifferenz, die über die inertiale Messeinheit 54 erfasst wird, möglich.

Eine solche Bildkompensation kann beispielsweise von statten gehen, indem eine von einem ersten zu einem zweiten Zeitpunkt erfolgte Drehbewegung des Prismenblocks beziehungsweise optischen Gelenks 10 um seine Längsachse beziehungsweise Nickachse 40 erfasst wird. Die relevanten Bilddaten, beispielsweise des letzten Bilds, werden dann mit dem doppelten Drehwinkel in die neue Drehposition umgerechnet. Eine eventuell erfolgte Drehung des Rollrahmens 70 kann mit entsprechendem Vorzeichen hinzugefügt werden. Das so erzeugte drehkompensierte Bild kann danach anhand der gemessenen Winkeldifferenzen - verursacht eine Flugbewegung des Lenkflugkörpers um Nick- und Gierachse - entsprechend zum kompensierten Bild verschoben werden. Das kompensierte Bild kann einerseits die Grundlage für Bildvergleiche bilden, andererseits zur Kompensationsberechnung zum folgenden Bild herangezogen werden.

Um in der Bildverarbeitung Bildvergleiche zu ermöglichen, muss die optische Doppeldrehung der Umkehrprismen unter Verwendung des momentanen Nickwinkels und insbesondere auch des momentanen Rollwinkels über ein spezielles Rechenmodul zu jedem Bild ermittelt werden. Auch ist es möglich, die inertialen Bewegungsdaten des Lenkflugkörpers 2 bei der Bildkorrektur einzubeziehen. Damit sind dann in der Bildverarbeitung Merkmale aus zeitlich aufeinander folgenden Bildern auch bei mechanisch bewegter Struktur vergleichbar.

Das Prozessmittel 16 ist dazu vorbereitet, im Bildtakt eine Bildverschiebung auf dem Detektor 14, die durch die Gesichtsfeldverschwenkung und/oder durch eine Verschwenkung einer Eintrittsfensterausrichtung zur Objektszene 18 bewirkt ist, zu ermitteln und einer Bildverarbeitung Bildkorrekturdaten zur Verfügung zu stellen. Die Bildverschiebung kann zu einer festgelegten Referenz festgelegt sein, z.B. zu einer unverschwenkten Stellung des Gesichtsfelds.

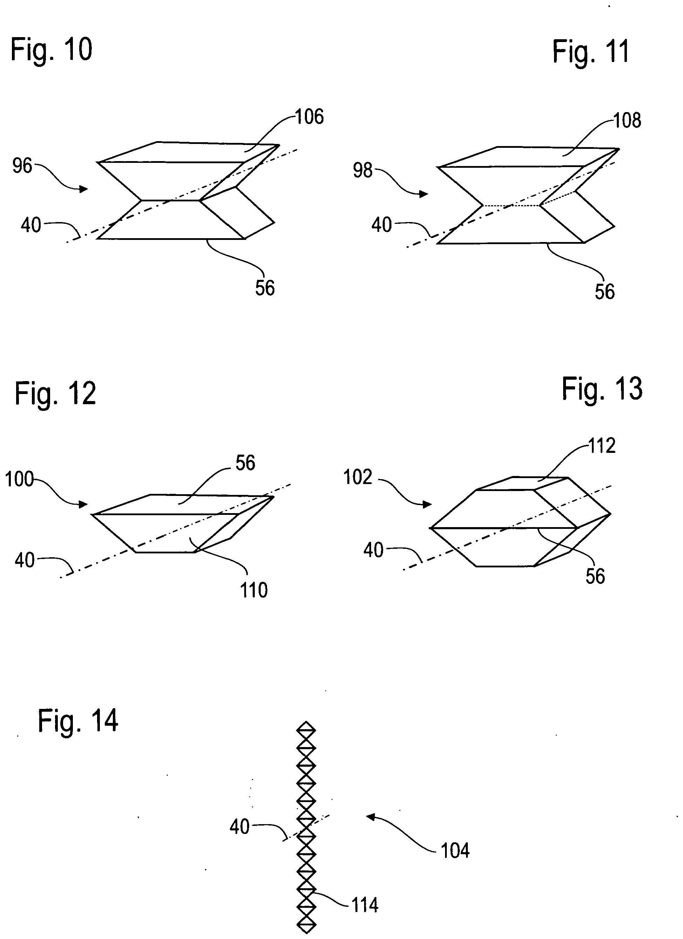

Die Figuren 10 bis 14 zeigen weitere Ausführungsbeispiele erfindungsgemäßer optischer Gelenke 96, 98 100, 102, 104. Bei den Beispielen aus den Figuren 13 und 14 können mehr als zwei Umkehrprismen 112, 114 verwendet werden, wohingegen in Fig. 10 ein optisches Gelenk 96 mit zwei Umlenkprismen 106 und in den Figuren 11 und 12 jeweils mit nur einem Umlenkprisma 108, 110 gezeigt ist. Das Umlenkprisma 108 ist prinzipiell aufgebaut wie die beiden Umlenkprismen 106 zusammen, wobei jedoch nur ein monolithischer Prismenblock vorhanden ist.

Bei dem Ausführungsbeispiel aus Fig. 10 liegen die beiden Hypotenuseflächen, die jeweils als Reflektionsfläche dienen, außen, wobei die Wirkweise des Gelenks 96 dem Gelenk 10 entspricht. Das Gelenk 98 wirkt identisch wie das Gelenk 94 und unterscheidet sich nur mechanisch durch seine Bauweise, nicht jedoch optisch vom Gelenk 94.

Wie Fig. 12 zeigt, ist auch die Verwendung eine einzelnen Dachkantprismas 110 als optisches Gelenk 100 möglich. Je nach Anordnung zu einem genau nach vorne gerichteten Gesichtsfeld ist gegebenenfalls die Verwendung auf nur eine Nickrichtung beschränkt. Es ist jedoch auch möglich, die Hypotenusefläche 56 schräg zur Richtung eines unverschwenkten Gesichtsfelds bzw. zur Rollachse bei unverschwenktem Gesichtsfeld anzuordnen, so dass eine Verschwenkung in beide Richtungen ermöglicht wird.

Wie die Ausführungsbeispiele zeigen, ist die Form des verwendeten Dachkantprismas vielfältig variabel. Eine abgeplattete Dachform, wie in den Figuren 10, 12 und 13 gezeigt, ist ebenso möglich, wie die spitze Dachform aus dem ersten Ausführungsbeispiel der ersten Figuren. Auch eine Satteldachform anstelle der abgeplatteten Dachform bzw. Schleppdachform ist möglich. Die spitze Dachform hat den Vorzug, dass die Dachspitze gut zur Einfassung des jeweiligen Prismas verwendet werden kann, da die Dachspitze optisch nicht unbedingt gebraucht wird.

In den Beispielen aus Fig. 13 und Fig. 14 sind jeweils zwei Umkehrprismen 108, 110 mit ihrer Reflektionsfläche beziehungsweise Hypotenusefläche 56 aufeinander gelegt und bilden einen Prismenblock. Bei Fig. 14 ist aus Vereinfachungsgründen auf die Darstellung der Abplattung verzichtet worden, wobei jede der beschriebenen Dachformen möglich ist. Anstelle der Ausführung aus Fig. 13 können auch mehrere Paare, z.B. zwei Paare, aufeinander gelegt werden, wobei das Aufeinanderlegen besonders günstig an der Dachabplattung ist, die zweckmäßigerweise parallel zur Hypotenusefläche 56 ist. Bei dem in Fig. 13 dargestellten Ausführungsbeispiel sind die Umkehrprismen 108 jeweils an ihrer der Hypotenusefläche gegenüber liegenden Seite parallel zur Hypotenusefläche abgeplattet, sodass die Umkehrprismen 112 an diesen abgeplatteten Flächen aufeinander gelegt werden können. Es wird somit ein Stapel von einer beliebigen Anzahl, z.B. drei, vier, fünf oder mehr, aufeinander liegenden Umkehrprismen 112 gebildet. Die Zahl der Umkehrprismen 104 -110 ist im Prinzip beliebig, wie auch in Fig. 14 angedeutet ist. Das optische Wirkprinzip verdeutlicht, dass auch Mikroprismen 114 verwendet werden können, die sich durch eine Dicke senkrecht zur Hypotenusefläche von maximal 1 mm auszeichnen, insbesondere maximal 0,2 mm. Es können hierdurch gewichtsmäßig extrem leichte optische Gelenke 104 hergestellt werden.

Bei Verwendung mehrerer Umkehrprismen müssen diese auch nicht gleich groß sein. Die Kombination eines größeren mit einem kleineren Umkehrprisma ist durchaus möglich und vorteilhaft.

Die Wirkweisen der optischen Gelenke 96 - 104 sind identisch zu der oben beschriebenen Wirkweise des optischen Gelenks 10, wobei ggf. mehr als zwei Bilder der Objektszene 18 erzeugt werden. Besonders vorteilhaft ist es, wenn die Umlenkprismen 106 - 114 gemeinsam um die Nickachse 40 verschwenkt werden und dass sie afokal sind, um Bildstörungen bei einem Verschwenken zu vermeiden.

### Bezugszeichenliste

- 2: Lenkflugkörper
- 4: Suchkopf
- 6: Optische Vorrichtung
- 8: Eingangsoptik
- 10: Optisches Gelenk
- 12: Detektoroptik
- 14: Detektor
- 16: Steuereinheit
- 18: Objektszene
- 22: Wirkeinsatz
- 24: Raketenmotor
- 26: Leitwerk
- 28: Aktuator
- 30: Gesichtsfeld
- 32: Dom
- 34: Außenhülle
- 36: Linse
- 38: Linse
- 40: Nickachse
- 42: Rollachse
- 44: Umkehrprisma
- 46: Umkehrprisma
- 48: Linse
- 50: Kühler
- 52: Kühlerfenster
- 54: inertiale Messeinheit
- 56: Hypotenusefläche
- 58: Eintrittsfläche
- 60: Austrittsfläche
- 62: Getriebe
- 64: Zahnrad
- 66: Zahnrad
- 68: Stirnräder
- 70: Rollrahmen
- 72: Direktantrieb
- 74: Stützstruktur
- 76: Stützstruktur
- 78: Gehäusestruktur
- 80: Direktantrieb
- 82: Lagergabel
- 84: Abschirmung
- 86: Abschirmelement
- 88: Rolle
- 90: Zahnradkopplung
- 92: Element
- 94: Funktionsmodul
- 96: Optisches Gelenk
- 98: Optisches Gelenk
- 100: Optisches Gelenk
- 102: Optisches Gelenk
- 104: Optisches Gelenk
- 106: Umkehrprisma
- 108: Umkehrprisma
- 110: Umkehrprisma
- 112: Umkehrprisma
- 114: Umkehrprisma

## Patentansprüche

1. Optische Vorrichtung (6) zum Führen von Strahlung aus einer Objektszene (18) auf einen Detektor (14) mit einem Ausrichtmittel zum Verschwenken des Gesichtsfelds (30) des Detektors (14) relativ zu einer vorbestimmten Richtung, einer durch das Ausrichtmittel verschwenkbaren Eingangsoptik (8), einer Detektoroptik (12), einem zwischen der Eingangsoptik (8) und der Detektoroptik (12) angeordneten optischen Gelenk (10, 96, 98, 100, 102) zum Führen des Strahlengangs aus dem verschwenkten Gesichtsfeld (30) in die Detektoroptik (12) und einem Rotationsmittel zum Drehen des optischen Gelenks (10, 96, 98, 100, 102), wobei
a) das optische Gelenk (10, 96, 98, 100, 102) ein Umkehrprisma (44, 46, 104, 106, 108, 110) aufweist, in dem ein in eine vordere Dachfläche fallendes paralleles Strahlenbündel zur Hypotenusenfläche des Umkehrprismas (44, 46, 104, 106, 108, 110) hin gebrochen, von dieser reflektiert und an der hinteren Dachfläche erneut gebrochen wird,
b) das Rotationsmittel so ausgeführt ist, dass das optische Gelenk (10, 96, 98, 100, 102) stets mit dem halben Schwenkwinkel des Gesichtsfelds (30) mitgeschwenkt wird,
c) die Eingangsoptik (8) die aus der Objektszene (18) einfallende Eintrittsstrahlung um den Faktor von 1,2 bis 10 verdichtet und
d) die Eingangsoptik (8) afokal ist, so dass ein paralleler Strahleneinfall von der Objektszene (18) parallel auf das optische Gelenk (10, 96, 98, 100, 102) gelenkt wird.

2. Vorrichtung (6) nach Anspruch 1,
wobei das Umkehrprisma (44, 46, 104, 106, 108, 110) eine parallel zur optischen Achse ausgerichtete Hypotenusenfläche (56) aufweist.

3. Vorrichtung (6) nach Anspruch 1 oder 2,
wobei das optische Gelenk (10, 96, 100, 102) zumindest zwei im Strahlengang gleich wirkende Umkehrprismen (44, 46, 104, 108, 110) aufweist, die an ihren Hypotenusenflächen (56) aneinander angrenzen, und die - in Verbindung mit der Detektoroptik (12) - jeweils ein Gesamtbild der Objektszene (18) auf den Detektor (14) abbilden.

4. Vorrichtung (6) nach einem der vorhergehenden Ansprüche,
wobei die Verschwenkachse der Gesichtsfeldverschwenkung durch ein Symmetriezentrum des optischen Gelenks (10, 96, 98, 100, 102) verläuft.

5. Vorrichtung (6) nach einem der vorhergehenden Ansprüche,
wobei das optische Gelenk (100, 102) mehr als zwei Umlenkprismen (108, 110) aufweist, die im Strahlengang benachbart angeordnet sind und die - in Verbindung mit der Detektoroptik (12) - jeweils ein Gesamtbild des Gesichtsfelds (30) auf den Detektor (14) abbilden.

6. Vorrichtung (6) nach einem der vorhergehenden Ansprüche
mit einem von der Umgebung mechanisch abschirmendem Eintrittsfenster, wobei die Eingangsoptik (8) optische Eigenschaften des Eintrittsfensters so ausgleicht, dass die Afokalität in der Kombination von Fenster und Eingangsoptik (8) erhalten bleibt.

7. Vorrichtung (6) nach einem der vorhergehenden Ansprüche,
wobei das optische Gelenk (10, 96, 98, 100, 102) afokal ist und der Strahlengang sowohl vor als auch nach dem optischen Gelenk (10, 96, 98, 100, 102) parallel ist.

8. Vorrichtung (6) nach einem der vorhergehenden Ansprüche,
wobei das Ausrichtmittel und das Rotationsmittel mechanisch zwangsgekoppelt und so ausgeführt sind, dass ein Kraftfluss zum Drehen des Gelenks (10, 96, 98, 100, 102) über das Ausrichtmittel in das Rotationsmittel geführt ist.

9. Vorrichtung (6) nach einem der vorhergehenden Ansprüche,
wobei die Eingangsoptik (8) und das optische Gelenk (10, 96, 98, 100, 102) jeweils in ihrer Bewegung zum Verschwenken des Gesichtsfelds (30) unabhängig voneinander gelagert sind.

10. Vorrichtung (6) nach einem der vorhergehenden Ansprüche
mit einer um das optische Gelenk (10, 96, 98, 100, 102) geführten Abschirmung (84), die das optische Gelenk (10, 96, 98, 100, 102) vor nicht durch die Ein- oder Austrittsapertur des optischen Gelenks (10, 96, 98, 100, 102) einfallender Einstrahlung abschirmt, wobei die Abschirmung (84) bevorzugterweise zumindest ein in der Flächenausdehnung variables Abschirmelement (86) und eine mechanische Kopplung an eine Eingangsoptik (8) aufweist, die eine an eine Verschwenkung des Gesichtsfelds (30) gekoppelte Flächenvariation bewirkt.

11. Vorrichtung (6) nach Anspruch 10,
wobei die Abschirmung (84) zumindest eine Abwickelvorrichtung (88) aufweist und das Abschirmelement (86) abwickelbar ist.

12. Vorrichtung (6) nach Anspruch 10 oder 11,
wobei das Abschirmelement (86) in seiner Bewegung mit einer Bewegung einer Eingangsoptik (8) mechanisch zwangsgekoppelt ist, wobei ein Kraftfluss zur Bewegung über ein an der Eingangsoptik (8) angreifendes Element (92) geführt ist.

13. Vorrichtung (6) nach einem der vorhergehenden Ansprüche
mit einem Prozessmittel (16), das dazu vorbereitet ist, im Bildtakt eine Bildverschiebung auf dem Detektor (14) zu einer festgelegten Referenz, die durch die Gesichtsfeldverschwenkung und/oder durch eine Verschwenkung einer Eintrittsfensterausrichtung zur Objektszene (18) bewirkt ist, zu ermitteln und einer Bildverarbeitung Bildkorrekturdaten zur Verfügung zu stellen.

14. Vorrichtung (6) nach einem der vorhergehenden Ansprüche,
wobei zwischen dem optischen Gelenk (10, 96, 98, 100, 102) und der Detektoroptik (12) ein paralleler Strahlengang vorliegt, in dem ein Funktionsmodul (94) zur dämpfenden und/oder spektralen optischen Beeinflussung des Strahlengangs angeordnet ist.

15. Suchkopf (4) für einen Lenkflugkörper (2) mit einer optischen Vorrichtung (6) nach einem der vorhergehenden Ansprüche
mit einem teilkugelförmigen Eintrittsfenster in Form eines Doms (32) mit einem Kugelzentrum, durch das die Schwenkachse der Gesichtsfeldverschwenkung verläuft und in der das Symmetriezentrum des optischen Gelenks (10, 96, 98, 100, 102) angeordnet ist.

## Claims

1. Optical apparatus (6) for guiding radiation from an object scene (18) onto a detector (14), having a directing means for pivoting the field of view (30) of the detector (14) relative to a predetermined direction, an input optical unit (8) which is pivotable by the directing means, a detector optical unit (12), an optical joint (10, 96, 98, 100, 102), arranged between the input optical unit (8) and the detector optical unit (12), for guiding the beam path from the pivoted field of view (30) into the detector optical unit (12), and a rotating means for rotating the optical joint (10, 96, 98, 100, 102), wherein
a) the optical joint (10, 96, 98, 100, 102) has an inverting prism (44, 46, 104, 106, 108, 110), in which a parallel beam bundle, which is incident in a front roof surface, is refracted to the hypotenuse area of the inverting prism (44, 46, 104, 106, 108, 110), is reflected thereby and is refracted again at the rear roof surface,
b) the rotating means is embodied such that the optical joint (10, 96, 98, 100, 102) is always concomitantly pivoted by half the pivot angle of the field of view (30),
c) the input optical unit (8) compresses the entrance radiation that is incident from the object scene (18) by the factor of 1.2 to 10, and
d) the input optical unit (8) is afocal such that a parallel ray incidence from the object scene (18) is deflected parallel onto the optical joint (10, 96, 98, 100, 102).

2. Apparatus (6) according to Claim 1, wherein the inverting prism (44, 46, 104, 106, 108, 110) has a hypotenuse area (56) which is oriented parallel to the optical axis.

3. Apparatus (6) according to Claim 1 or 2, wherein the optical joint (10, 96, 100, 102) has at least two inverting prisms (44, 46, 104, 108, 110) of equal effect in the beam path, which adjoin one another at their hypotenuse areas (56), and which - in connection with the detector optical unit (12) - respectively image a total image of the object scene (18) onto the detector (14).

4. Apparatus (6) according to one of the preceding claims, wherein the pivot axis of the field-of-view pivot extends through a centre of symmetry of the optical joint (10, 96, 98, 100, 102).

5. Apparatus (6) according to one of the preceding claims, wherein the optical joint (100, 102) has more than two deflecting prisms (108, 110), which are arranged adjacently in the beam path and which - in connection with the detector optical unit (12) - respectively image a total image of the field of view (30) onto the detector (14).

6. Apparatus (6) according to one of the preceding claims, having an entrance window, which mechanically shields against the environment, wherein the input optical unit (8) compensates for optical properties of the entrance window in a manner such that the afocality is maintained in the combination of window and input optical unit (8).

7. Apparatus (6) according to one of the preceding claims, wherein the optical joint (10, 96, 98, 100, 102) is afocal and the beam path is parallel both upstream and downstream of the optical joint (10, 96, 98, 100, 102).

8. Apparatus (6) according to one of the preceding claims, wherein the directing means and the rotating means are mechanically force-coupled and embodied such that a flow of forces for rotating the joint (10, 96, 98, 100, 102) is guided via the directing means into the rotating means.

9. Apparatus (6) according to one of the preceding claims, wherein the input optical unit (8) and the optical joint (10, 96, 98, 100, 102) are mounted in each case independently from one another in terms of their movement for pivoting the field of view (30).

10. Apparatus (6) according to one of the preceding claims, having a shield (84), which is guided around the optical joint (10, 96, 98, 100, 102) and shields the optical joint (10, 96, 98, 100, 102) against radiation that is not incident through the entrance or exit aperture of the optical joint (10, 96, 98, 100, 102), wherein the shield (84) preferably has at least one shield element (86), which is variable in terms of the surface area, and a mechanical coupling to an input optical unit (8), which effects an area variation which is coupled to a pivoting of the field of view (30).

11. Apparatus (6) according to Claim 10, wherein the shield (84) has at least one unwinding apparatus (88), and the shield element (86) is able to be unwound.

12. Apparatus (6) according to Claim 10 or 11, wherein the movement of the shield element (86) is mechanically force-coupled to a movement of an input optical unit (8), wherein a flow of forces for moving is guided via an element (92) which engages at the input optical unit (8) .

13. Apparatus (6) according to one of the preceding claims, having a process means (16) which is prepared to ascertain in the image cycle an image displacement on the detector (14) with respect to a fixed reference, which is effected by the field-of-view pivot and/or by a pivot of an entrance window orientation toward the object scene (18) and to provide image correction data to an image processing means.

14. Apparatus (6) according to one of the preceding claims, wherein a parallel beam path, in which a function module (96) for the attenuating and/or spectral optical influencing of the beam path is arranged, is situated between the optical joint (10, 96, 98, 100, 102) and the detector optical unit (12).

15. Homing head (4) for a guided missile (2) having an optical apparatus (6) according to one of the preceding claims, having a partially spherical entrance window in the form of a dome (32) having a sphere centre, through which the pivot axis of the field-of-view pivot extends and in which the centre of symmetry of the optical joint (10, 96, 98, 100, 102) is arranged.

## Revendications

1. Dispositif optique (6) destiné à guider un rayonnement issu d'une scène d'objet (18) sur un détecteur (14), comprenant un moyen d'orientation servant à faire pivoter le champ de vision (30) du détecteur (14) par rapport à une direction prédéfinie, une optique d'entrée (8) pouvant être pivotée par le moyen d'orientation, une optique de détecteur (12), une jonction optique (10, 96, 98, 100, 102) disposée entre l'optique d'entrée (8) et l'optique de détecteur (12) destinée à guider le trajet de rayon depuis le champ de vision (30) pivoté dans l'optique de détecteur (12) et un moyen de rotation destiné à faire tourner la jonction optique (10, 96, 98, 100, 102),
a) la jonction optique (10, 96, 98, 100, 102) possédant un prisme d'inversion (44, 46, 104, 106, 108, 110) dans lequel un faisceau de rayons parallèle incident dans une surface de toit avant est brisé vers la surface d'hypoténuse du prisme d'inversion (44, 46, 104, 106, 108, 110), réfléchi par celle-ci et de nouveau brisé au niveau de la surface de toit arrière,
b) le moyen de rotation est exécuté de telle sorte que la jonction optique (10, 96, 98, 100, 102) accompagne toujours le pivotement avec la moitié de l'angle de pivotement du champ de vision (30),
c) l'optique d'entrée (8) condense le rayonnement d'entrée incident depuis la scène d'objet (18) d'un facteur de 1,2 à 10 et
d) l'optique d'entrée (8) est afocale, de sorte qu'une incidence de rayon parallèle de la scène d'objet (18) est déviée en parallèle sur la jonction optique (10, 96, 98, 100, 102).

2. Dispositif (6) selon la revendication 1, le prisme d'inversion (44, 46, 104, 106, 108, 110) possédant une surface d'hypoténuse (56) orientée parallèlement à l'axe optique.

3. Dispositif (6) selon la revendication 1 ou 2, la jonction optique (10, 96, 100, 102) possédant au moins deux prismes d'inversion (44, 46, 104, 108, 110) qui agissent de la même manière dans le trajet du rayon, lesquels sont adjacents l'un de l'autre au niveau de leurs surfaces d'hypoténuse (56) et, en association avec l'optique de détecteur (12), représentent respectivement une image globale de la scène d'objet (18) sur le détecteur (14).

4. Dispositif (6) selon l'une des revendications précédentes, l'axe de pivotement du pivotement du champ de vision passant par un centre de symétrie de la jonction optique (10, 96, 98, 100, 102).

5. Dispositif (6) selon l'une des revendications précédentes, la jonction optique (100, 102) possédant plus de deux prismes d'inversion (108, 110), lesquels sont disposés l'un à côté de l'autre dans le trajet de rayon et, en association avec l'optique de détecteur (12), représentent respectivement une image globale du champ de vision (30) sur le détecteur (14).

6. Dispositif (6) selon l'une des revendications précédentes, comprenant une fenêtre d'entrée qui assure une protection mécanique par rapport à l'environnement, l'optique d'entrée (8) compensant les propriétés optiques de la fenêtre d'entrée de telle sorte que le caractère afocal soit conservé dans la combinaison de la fenêtre et de l'optique d'entrée (8).

7. Dispositif (6) selon l'une des revendications précédentes, la jonction optique (10, 96, 98, 100, 102) étant afocale et le trajet de rayon étant parallèle à la fois avant et après la jonction optique (10, 96, 98, 100, 102).

8. Dispositif (6) selon l'une des revendications précédentes, le moyen d'orientation et le moyen de rotation étant reliés par accouplement mécanique forcé et exécutés de telle sorte qu'un flux de force servant à faire tourner la jonction (10, 96, 98, 100, 102) est guidé dans le moyen de rotation par le biais du moyen d'orientation.

9. Dispositif (6) selon l'une des revendications précédentes, l'optique d'entrée (8) et la jonction optique (10, 96, 98, 100, 102) étant respectivement supportées indépendamment l'une de l'autre dans leur mouvement de pivotement du champ de vision (30).

10. Dispositif (6) selon l'une des revendications précédentes, comprenant un écran de protection (84) qui passe autour de la jonction optique (10, 96, 98, 100, 102), lequel protège la jonction optique (10, 96, 98, 100, 102) contre une irradiation qui n'est pas incidente à travers l'ouverture d'entrée ou de sortie de la jonction optique (10, 96, 98, 100, 102), l'écran de protection (84) possédant de préférence au moins un élément de protection (86) dont la superficie est variable et un couplage mécanique à une optique d'entrée (8) qui produit une variation de surface couplée à un pivotement du champ de vision (30).

11. Dispositif (6) selon la revendication 10, l'écran de protection (84) possédant au moins un dispositif de déroulement (88) et l'élément de protection (86) étant déroulable.

12. Dispositif (6) selon la revendication 10 ou 11, l'élément de protection (86), dans son mouvement, étant relié par accouplement mécanique forcé à un mouvement d'une optique d'entrée (8), un flux de force servant au déplacement étant guidé par le biais d'un élément (92) venant en prise sur l'optique d'entrée (8).

13. Dispositif (6) selon l'une des revendications précédentes, comprenant un moyen de traitement (16) qui est conçu pour déterminer, à la cadence des images, un décalage d'image sur le détecteur (14) par rapport à une référence fixée, laquelle est provoquée par le pivotement du champ de vision et/ou par un pivotement d'une orientation de la fenêtre d'entrée par rapport à la scène d'objet (18), et pour délivrer des données de correction d'image à un système de traitement d'image.

14. Dispositif (6) selon l'une des revendications précédentes, un trajet de rayon parallèle se trouvant entre la jonction optique (10, 96, 98, 100, 102) et l'optique de détecteur (12), dans lequel est disposé un module fonctionnel (94) destiné à exercer une influence optique atténuatrice et/ou spectrale sur le trajet de rayon.

15. Tête chercheuse (4) pour un missile guidé (2) comprenant un dispositif (6) optique selon l'une des revendications précédentes, comprenant une fenêtre d'entrée partiellement sphérique sous la forme d'un dôme (32), doté d'un centre de sphère à travers lequel passe l'axe de pivotement du pivotement du champ de vision et dans lequel est disposé le centre de symétrie de la jonction optique (10, 96, 98, 100, 102).
